# EUROPEAN PATENT APPLICATION

(11) **EP 4 726 248 A1**
(43) Date of publication of application: **15.04.2026**
(21) Application number: 24842261.0
(22) Date of filing: 10.07.2024
(51) Int. Cl.: F16M 11/04, F16M 11/10, F16M 11/24, H05K 5/02

(54) **VERTICAL SUPPORT FOR MOBILE DEVICE**

(30) Priority: 14.07.2023 CN 202321864968 U
(71) Applicant: Shenzhen Moft Technology Co., Ltd, Shenzhen, Guangdong 518000 (CN)
(72) Inventor: HUANG, Chenglan, Shenzhen, Guangdong 518000 (CN)
(74) Representative: Metida
(86) International application number: PCT/CN2024/104794
(87) International publication number: WO 2025/016267

(57) **Abstract**

The present application provides a upright stand for a mobile device which comprises: a coupling part, which can be directly or indirectly fixed with a first mobile device in a non-permanent way; and first and second supporting parts, one end of the second supporting part is fixed with one end of the first supporting part, while the other end thereof opposite to the end fixed with the first supporting part is a free end, and the second supporting part is provided with a first bending part, by which the free end of the second supporting part can be bent relative to the first supporting part; wherein one end of the first and second supporting parts is connected with one end of the coupling part by a damping rotating shaft, and the coupling part can be turned over relative to the first and second supporting parts by the damping rotating shaft.

## Description

### TECHNICAL FIELD

The present application relates to the field of supports, and in particular, relates to an upright stand for mobile devices which can assume various upright states after being bent and unfolded, so that users can put the mobile device on it to make the mobile device stand upright.

### BACKGROUND

In recent years, with the progress of the mobile communication technology, various mobile devices such as mobile phones, tablet computers or notebook computers have become indispensable common items in daily life. However, in most cases, these mobile devices, which are often used for watching movies, searching for information or operating social networking sites, need to be held by hands to watch or manipulate, which has caused a lot of inconveniences.

Generally speaking, when holding a mobile device with one hand, the user can only control and use the mobile device with the other hand, especially in the case of large mobile devices such as tablet computers. This is quite inconvenient for the use of mobile devices, and at the same time, the user's hands are limited. Therefore, if the mobile device can be laid flat on a plane such as a desk when the user uses it indoors, then both hands of the user can be freed to operate the mobile device. However, in this case, the mobile device can only be laid flat on the desktop, so it is difficult for the user to watch the contents on the screen, or the user can only operate and control the screen at inconvenient angles. Therefore, there are still many inconveniences in the use of mobile devices, which must be improved.

Accordingly, after years of experience in related industries, the applicant has conceived and proposed a folding positioning support structure for mobile devices to solve the shortcomings of the existing methods of use.

### SUMMARY

The present application discloses an upright stand for a mobile device, which mainly comprises a coupling part, a first supporting part and a second supporting part. The coupling part may be directly or indirectly fixed with the first mobile device mutually in a non-permanent way. In some embodiments, the first mobile device is covered by a protective structure, such as a protective shell, a decorative shell or the like, and the protective structure has a mechanism (such as magnetism) for mutually fixing with the coupling part. The first mobile device may be fixed to the coupling part indirectly by means of the protective structure. In some other embodiments, the first mobile device itself has a mechanism (such as magnetism) for mutually fixing with the coupling part, and the first mobile device can be directly fixed with the coupling part.

One end of the second supporting part is fixed with one end of the first supporting part, and the other end of the second supporting part opposite to the end fixed with the first supporting part is a free end, and the second supporting part is provided with a first bending part, by which the free end of the second supporting part can be bent relative to the first supporting part. One end of the first supporting part and the second supporting part is connected with one end of the coupling part by means of a damping rotating shaft, and the coupling part can be turned over relative to the first supporting part and the second supporting part by the damping rotating shaft. The damping rotating shaft is characterized in that, the user must take the first supporting part and the coupling part as the arms of force, and apply a moment greater than a first critical moment to the damping rotating shaft to overcome a resistance of the damping rotating shaft and make it rotate. The first supporting part and the coupling part take the damping rotating shaft as the fulcrum, and the first supporting part and the coupling part can be turned over relative to each other by the damping rotating shaft, so that the first supporting part and the coupling part form an included angle.

The upright stand for the mobile device further comprises a connecting part, and the connecting part connects the free end of the second supporting part with the first supporting part by a plurality of bending parts. The connecting part comprises a first sub-connecting part and a second sub-connecting part, wherein one end of the first sub-connecting part is connected with the free end of the second supporting part, and the other end of the first sub-connecting part is connected with the first sub-connecting part. In some embodiments, the second sub-connecting part further comprises a bending part, by which the second sub-connecting part can be bent relative to the first sub-connecting part.

In some embodiments, the first sub-connecting part further comprises a bending part, by which the first sub-connecting part can be bent relative to the second sub-connecting part; and in a supporting state, the first sub-connecting part is in a folded state.

In some embodiments, the first bending part further comprises a damping rotating shaft and a plurality of bending parts.

In some embodiments, the upright stand for the mobile device further comprises a bonding part connecting the first supporting part with the second supporting part, and the bonding part and the coupling part are directly or indirectly fixed to each other in a permanent way; and the bonding part can be turned over relative to the first supporting part and the second supporting part by the damping rotating shaft. A plurality of bending parts are arranged along the coaxial direction of the damping rotating shaft, and the bonding part can also be turned over relative to the first supporting part and the second supporting part by the plurality of bending parts.

In some embodiments, the first sub-connecting part further comprises a bending part, by which the first sub-connecting part can be bent relative to the second sub-connecting part; and the second sub-connecting part further comprises at least one bending part, by which the second sub-connecting part can be bent relative to the first sub-connecting part. In a supporting state, the first sub-connecting part is in a folded state and the second sub-connecting part is in a folded state.

In some embodiments, the sidewall of the second supporting part is provided with a first accommodating cavity for accommodating the first sub-connecting part, and the sidewall of the first supporting part is provided with a second accommodating cavity for accommodating the second sub-connecting part; the first accommodating cavity and the second accommodating cavity can be respectively used for accommodating the first sub-connecting part and the second sub-connecting part; the first accommodating cavity is an accommodating hole or an accommodating groove, and the second accommodating cavity is an accommodating hole or an accommodating groove.

The user can form a supporting state and a storage state by bending the first sub-connecting part, the second sub-connecting part, the second supporting part and the coupling part. After use, the user can bend this state into the storage state.

In some embodiments, the upright stand for the mobile device mainly includes a first supporting part, a second supporting part, and a coupling part. The coupling part may be directly or indirectly fixed with the first mobile device in a non-permanent way. One end of the second supporting part is mutually fixed with one end of the first supporting part, the other end of the second supporting part opposite to the end fixed with the first supporting part is a free end, the second supporting part is provided with a first bending part, and the free end of the second supporting part can be bent relative to the first supporting part through the first bending part. One end of the first supporting part and the second supporting part is connected with one end of the coupling part through a first damping rotating shaft, and the coupling part can be turned over relative to the first supporting part and the second supporting part through the first damping rotating shaft. The second supporting part further comprises a second damping rotating shaft arranged on the first bending part, and the second supporting part can be turned over relative to the first supporting part through the second damping rotating shaft. The upright stand for the mobile device is provided with a first damping rotating shaft and a second damping rotating shaft. A user needs to apply a moment great than a first critical moment to the first damping rotating shaft to overcome the resistance of the first damping rotating shaft and make it rotate, the first supporting part and the coupling part take the first damping rotating shaft as the fulcrum, the first supporting part and the coupling part are turned over relative to each other through the first damping rotating shaft, and the first supporting part and the coupling part form a first included angle. The user needs to apply a moment great than a second critical moment to the second damping rotating shaft to overcome the resistance of the second damping rotating shaft and make it rotate, and the second supporting part takes the second damping rotating shaft as a fulcrum to be turned over relative to the first supporting part. After being turned over, the first supporting part and the second supporting part form a second included angle.

This embodiment is characterized in that the user can connect two mobile devices and display them side by side through the present application, so that the user can watch the screens of the two mobile devices at the same time. In addition, users may also optionally use the upright stand for the mobile device alone as a supporting stand for one mobile device. Through the first damping rotating shaft and the second damping rotating shaft, the user can adjust the angle supported by the supporting stand at will to watch the mobile device at any angle. As compared to the prior art, the present application has multiple functions and is highly customizable.

### BRIEF DESCRIPTION OF THE DRAWINGS

The features and elements in the drawings are not drawn to actual scale, but are drawn only to present the specific features and elements related to the present application in the best way. In addition, same or similar element symbols are used to refer the same or similar elements and components among different drawings. The specific attached drawings are illustrated as follows:
FIG. 1 is a schematic perspective view of an embodiment of the present application.
FIG. 2 is a side view of an embodiment of the present application.
FIG. 3 is a schematic view 1 of a folding process according to an embodiment of the present application.
FIG. 4A is a schematic view 2 of a folding process according to an embodiment of the present application.
FIG. 4B is the schematic view 2 of the folding process from another perspective according to an embodiment of the present application.
FIG. 5 is a schematic view 3 of a folding process according to an embodiment of the present application.
FIG. 6 is a partial schematic view of an embodiment of the present application.
FIG. 7A is a schematic view 1 of another folding process according to an embodiment of the present application.
FIG. 7B is a schematic view 2 of another folding process according to an embodiment of the present application.
FIG. 7C is a schematic view 3 of another folding process according to an embodiment of the present application.
FIG. 8 is a schematic view of a protective structure according to an embodiment of the present application.
FIG. 9 is a schematic view of a supporting state according to an embodiment of the present application.
FIG. 10 is a schematic view of the use of an embodiment of the present application.
FIG. 11 is another schematic view of the use of the embodiment of the present application.
FIG. 12 is a schematic perspective view of an embodiment of the present application.
FIG. 13 is a side view of an embodiment of the present application.
FIG. 14 is a schematic view of a storage state according to an embodiment of the present application.
FIG. 15 is a schematic view of a storage state according to an embodiment of the present application.
FIG. 16 is a schematic view of a supporting state according to an embodiment of the present application.
FIG. 17 is a schematic view of a storage state according to an embodiment of the present application.
FIG. 18 is a schematic perspective view of an embodiment of the present application.
FIG. 19 is a side view of an embodiment of the present application.
FIG. 20 is a schematic view of a storage state according to an embodiment of the present application.
FIG. 21 is a schematic perspective view of an embodiment of the present application.
FIG. 22 is a schematic perspective view of an embodiment of the present application.
FIG. 23 is a schematic view of a storage state according to an embodiment of the present application.
FIG. 24 is a schematic view of one side according to an embodiment of the present application.
FIG. 25 is a schematic view of the other side according to an embodiment of the present application.
FIG. 26 is a schematic view 1 of a first supporting state according to an embodiment of the present application.
FIG. 27 is a schematic view 2 of a first supporting state according to an embodiment of the present application.
FIG. 28 is a schematic view 3 of a first supporting state according to an embodiment of the present application.
FIG. 29 is a schematic view of a second supporting state according to an embodiment of the present application.
FIG. 30 is a schematic view 1 of a third supporting state according to an embodiment of the present application.
FIG. 31 is a schematic view 2 of a third supporting state according to an embodiment of the present application.
FIG. 32 is a schematic view 3 of a third supporting state according to an embodiment of the present application.

Description of reference numerals: 10-Coupling part; 20-First supporting part; 3-Bending part; 30-Second supporting part; 31-Free end; 32-First bending part; 33-Second bending part; 40-First damping rotating shaft; 50-Connecting part; 51-First sub-connecting part; 511-Head of first sub-connecting part; 512-Tail of first sub-connecting part; 513-Middle part of first sub-connecting part; 52-Second sub-connecting part; 521-Head of second sub-connecting part; 522-Tail of second sub-connecting part; 523-Middle part of second sub-connecting part; 70-Protective structure; 80-Second damping rotating shaft; 90-Bonding part; 100-Connector; θ-First included angle; a-Second included angle; β-Third included angle.

### DETAILED DESCRIPTION

The non-permanent fixing method mentioned in the present application means that two objects are fixed, connected, joined or linked with each other by means of magnetism, velcro tapes, detachable clamping mechanisms, repeatable adhesive glue or the like, and the mutual fixation, connection, joining or linkage of the two objects can be released at any time. The permanent fixing method mentioned in the present application means that two objects are fixed, connected, joined or linked with each other by means of non-repeatable gluing, sewing or nailing.

The coupling mentioned in the present application means that two objects are fixed, connected, joined or linked with each other through the above-mentioned non-permanent fixing method or permanent fixing method. Magnetism mentioned in the present application includes permanent magnetism, non-permanent magnetism, or ferromagnetic characteristics.

Although terms such as "first", "second" and "third" may be used herein to describe various elements, components, regions, or parts, these elements, components, regions, and/or parts should not be limited by these terms. These terms are only used to distinguish one element, component, region or part from another element, component, region, layer or part. Therefore, the "first ..." described below may be interpreted as "second ..." or "third ..." without departing from the teachings herein.

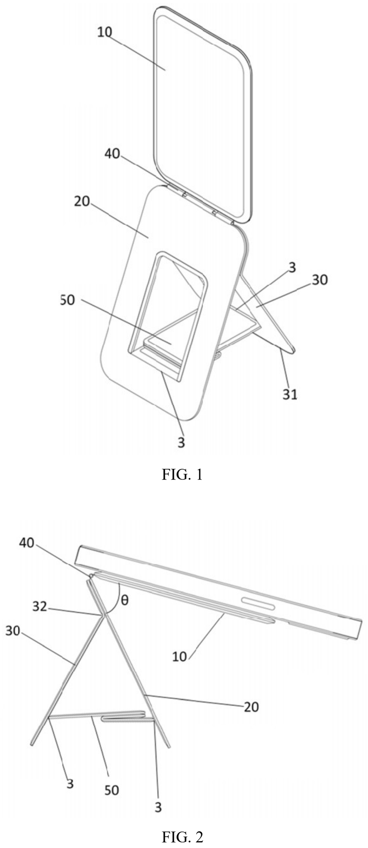

Referring to FIG. 1, FIG. 5 and FIG. 8, the present application discloses an upright stand for a mobile device, which mainly comprises a coupling part 10, a first supporting part 20 and a second supporting part 30. The coupling part 10 may be directly or indirectly fixed with the first mobile device mutually in a non-permanent way. In some embodiments, the first mobile device is covered by a protective structure 70, such as a protective shell, a decorative shell or the like, and the protective structure 70 has a mechanism (such as magnetism) for mutually fixing with the coupling part 10. The first mobile device may be fixed to the coupling part 10 indirectly by means of the protective structure 70. In some other embodiments, the first mobile device itself has a mechanism (such as magnetism) for mutually fixing with the coupling part 10, and the first mobile device may be directly fixed with the coupling part 10.

One end of the second supporting part 30 is fixed to one end of the first supporting part 20, the other end of the second supporting part 30 opposite to the end fixed with the first supporting part 20 is a free end 31, and the second supporting part 30 is provided with a first bending part 32, by which the free end 31 of the second supporting part 30 can be bent relative to the first supporting part 20. One end of the first supporting part 20 and the second supporting part 30 is connected with one end of the coupling part 10 by a first damping rotating shaft 40, and the coupling part 10 can be turned over relative to the first supporting part 20 and the second supporting part 30 by the first damping rotating shaft 40. The first damping rotating shaft 40 is characterized in that the user must take the first supporting part 20 and the coupling part 10 as arms of force, and apply a moment greater than a first critical moment to the first damping rotating shaft 40 to overcome a resistance of the first damping rotating shaft 40 and make it rotate. The first supporting part 20 and the coupling part 10 take the first damping rotating shaft 40 as the fulcrum, and the first supporting part 20 and the coupling part 10 can be turned over relative to each other by the first damping rotating shaft 40, so that the first supporting part 20 and the coupling part 10 form a first included angle θ (as shown in FIG. 2). In addition, in order to allow the user to freely adjust the viewing angle of the first mobile device without any limitation, the first critical moment of the first damping rotating shaft 40 is particularly adjusted, so that when the first mobile device and the coupling part 10 are directly or indirectly fixed to each other, a moment exerted by the gravity of the first mobile device on the first damping rotating shaft 40 is less than the first critical moment no matter which angle the included angle takes. In other words, the first critical moment is greater than the moment applied to the first damping rotating shaft 40 when the first mobile device and the coupling part 10 are directly or indirectly fixed to each other. In this way, the first damping rotating shaft 40 will not rotate at all angles, which enables the user to bend the coupling part 10 at all angles, thereby increasing the angle variability when watching the first mobile device (as shown in FIG. 2).

Referring to FIG. 1, FIG. 2, FIG. 5, and FIG. 6, the upright stand for the mobile device further includes a connecting part 50, and the connecting part 50 connects the free end 31 of the second supporting part 30 with the first supporting part 20 by a plurality of bending parts 3. The connecting part 50 includes a first sub-connecting part 51 and a second sub-connecting part 52, one end of the first sub-connecting part 51 is connected with the free end 31 of the second supporting part 30, and the other end of the first sub-connecting part 51 is connected with the second sub-connecting part 52. One end of the second sub-connecting part 52 is connected with the first supporting part 20. In some embodiments, the second sub-connecting part 52 further includes other bending parts 3, and the second sub-connecting part 52 can be bent relative to the first sub-connecting part 51 or folded with itself by these bending parts 3.

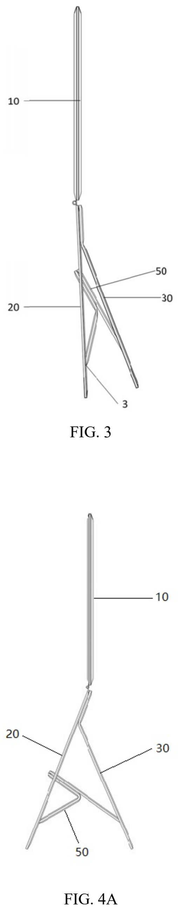

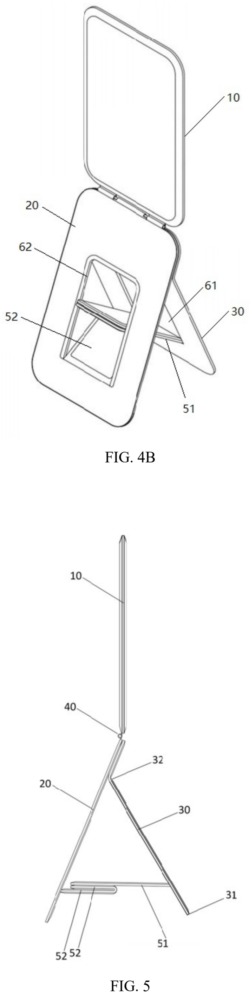

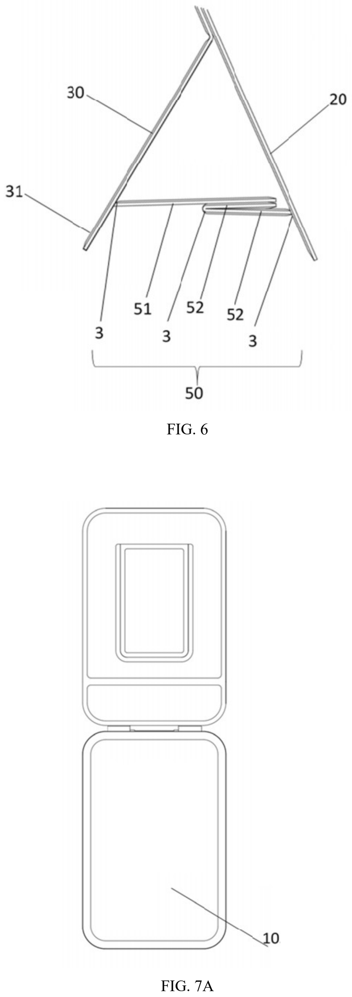

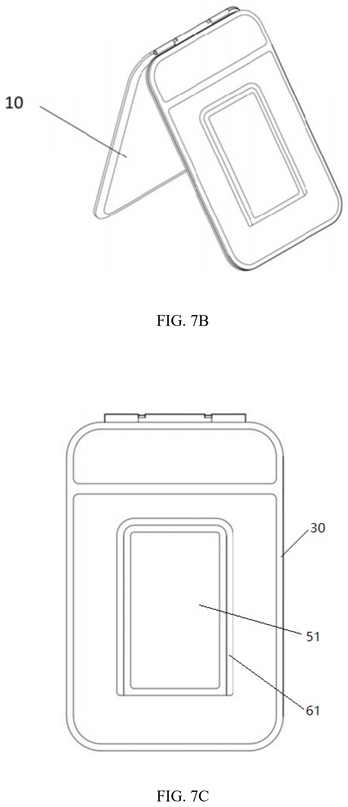

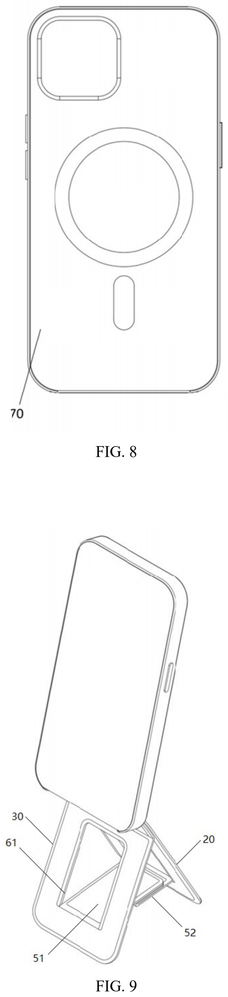

By bending the first sub-connecting part 51, the second sub-connecting part 52, the first supporting part 20, the second supporting part 30 and the coupling part 10, the user can form a supporting state as shown in FIG. 3 to FIG. 5 (which schematically show the folding to the supporting state in sequence, and FIG. 5 is one of the supporting states) and a storage state as shown in FIG. 7C (FIG. 7A to FIG. 7C show the folding to the storage state in sequence). In a supporting state, the second sub-connecting part 52 is in a folded state. In this supporting state, the second sub-connecting part 52 may be kept in the folded state by non-permanent fixing means, such as by magnetism. In addition, as can be seen from FIG. 5, the first supporting part 20 and the second supporting part 30 in the present application are in an A-shape in the side view, while the coupling part 10 can be bent at any angle. The upright stand for the mobile device according to the present application takes the first supporting part 20 and the second supporting part 30 as supporting feet as a whole, and the coupling part 10 provides various angles for users to watch the first mobile device. After use, the user may bend this state into the storage state. In the storage state, one end of the first sub-connecting part 51 is attached to the second supporting part 30, and the first supporting part 20 and the second supporting part 30 are attached to each other, as shown in FIG. 7B and FIG. 7C. For example, in the storage state, one end of the first sub-connecting part 51 is attached to the second supporting part 30 by magnetism, and the first supporting part 20 and the second supporting part 30 are attached to each other by non-permanent fixing means (such as by magnetism). In some embodiments, the coupling part 10 of the present application may be indirectly fixed to the first mobile device in a non-permanent way through the protective structure 70 joined with the first mobile device, as shown in FIG. 9.

For example, the protective structure 70 may be a mobile phone shell or a mobile phone back cover with a non-permanent fixing mechanism, as shown in FIG. 8. Alternatively, in some embodiments, the coupling part 10 may be directly fixed to the first mobile device in a non-permanent way without through any other medium. For example, both the first mobile device and the coupling part 10 may be coupled to each other by magnetism.

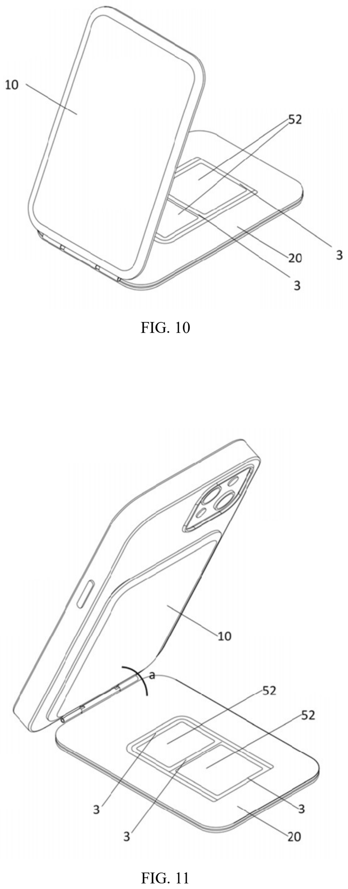

In addition, referring to FIG. 10 and FIG. 11, in another supporting state, the user may also form the supporting state shown in the figure simply by adjusting the included angle of the coupling part 10 with respect to the first supporting part 20 or the second supporting part 30, without unfolding the first supporting part 20, the second supporting part 30 and the connecting part 50. In this supporting state, the first supporting part 20 and the coupling part 10 form a second included angle a, and the first supporting part 20 and the second supporting part 30 are attached to each other. The first supporting part 20 and the second supporting part 30 are placed on a plane. As can be seen from the above description, the versatility of the present application enables convenient use for users.

Referring to FIG. 4B, FIG. 7C and FIG. 9, in some embodiments, the side wall of the second supporting part 30 is provided with a first accommodating cavity 61 for accommodating the first sub-connecting part 51, and the shape of the first accommodating cavity 61 is adapted to the shape of the first sub-connecting part 51. The side wall of the first supporting part 20 is provided with a second accommodating cavity 62 for accommodating the second sub-connecting part 52, and the shape of the second accommodating cavity 62 is adapted to the shape of the second sub-connecting part 52. Both the first sub-connecting part 51 and the second sub-connecting part 52 have a certain volume, and in the storage state (for example, FIG. 7C), the first sub-connecting part 51 can be accommodated in the first accommodating cavity 61 so as to reduce the overall thickness of the first sub-connecting part 51 and the second supporting part 30 after being attached together; while the second sub-connecting part 52 can be accommodated in the second accommodating cavity 62 so as to reduce the overall thickness of the second sub-connecting part 52 and the first supporting part 20 after being attached together. In this way, when the upright stand for the mobile device is in the storage state, the overall thickness of the upright stand for the mobile device will not be increased due to either the first sub-connecting part 51 or the second sub-connecting part 52.

In some embodiments, the first accommodating cavity 61 is an accommodating hole which runs through the whole second supporting part 30, that is, the first sub-connecting part 51 is exposed through the second supporting part 30. In some embodiments, the first accommodating cavity 61 is an accommodating groove which is located at one side of the second supporting part 30 near the first sub-connecting part 51. The accommodating groove may be understood as a blind hole that does not penetrate through the second supporting part 30. When the first sub-connecting part 51 is accommodated in the first accommodating cavity 61, the first sub-connecting part 51 cannot be seen from the other side of the second supporting part 30 far away from the first sub-connecting part 51. In this way, the aesthetics of the upright stand for the mobile device can be enhanced, and at the same time, the first sub-connecting part 51 can be protected. Like the first accommodating cavity 61, the second accommodating cavity 62 may also be an accommodating hole or an accommodating groove.

In some embodiments, both the first accommodating cavity 61 and the second accommodating cavity 62 are accommodating holes; in some embodiments, both the first accommodating cavity 61 and the second accommodating cavity 62 are accommodating grooves; or in some embodiments, one of the first accommodating cavity 61 and the second accommodating cavity 62 is an accommodating hole and the other is an accommodating groove.

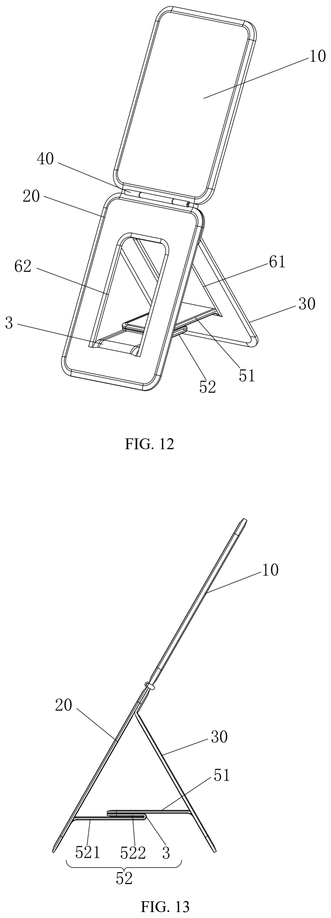

Referring to FIG. 12 to FIG. 14, in this embodiment, the first accommodating cavity 61 is an accommodating groove and the second accommodating cavity 62 is an accommodating hole. The second sub-connecting part 52 further comprises a plurality of bending parts 3, a head 521 of the second sub-connecting part and a tail 522 of the second sub-connecting part. One end of the head 521 of the second sub-connecting part is connected with the first supporting part 20 through a bending part 3, and the head 521 of the second sub-connecting part can be bent relative to the first supporting part 20 through the bending part 3. The other end of the head 521 of the second sub-connecting part is connected with one end of the tail 522 of the second sub-connecting part through a bending part 3, and the head 521 of the second sub-connecting part can be folded relative to the tail 522 of the second sub-connecting part through the bending part 3. The other end of the tail 522 of the second sub-connecting part is connected with the first sub-connecting part 51.

The contents of this embodiment that are the same as other embodiments mentioned above or that can be understood by referring to other embodiments mentioned above will not be further described herein.

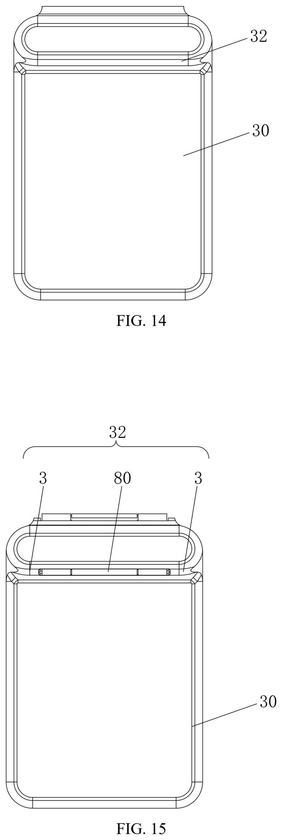

Referring to FIG. 15 to FIG. 16, in this embodiment, the upright stand for the mobile device has no connecting part 50. The second supporting part 30 further comprises a second damping rotating shaft 80 which is arranged at the first bending part 32, and the second supporting part 30 can be turned over relative to the first supporting part 20 through the second damping rotating shaft 80.

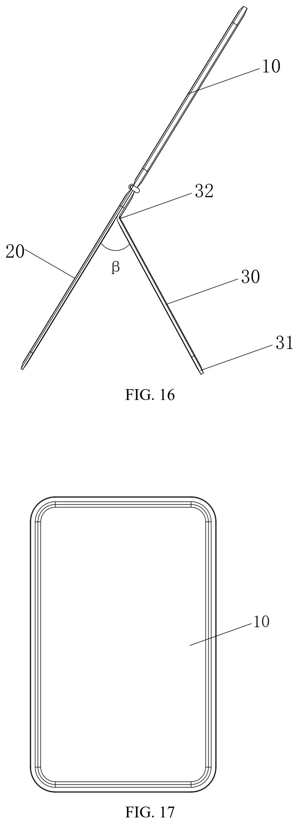

The first bending part 32 further includes a plurality of bending parts 3, which are arranged in the coaxial direction of the second damping rotating shaft 80, for example, on one side or both sides of the second damping rotating shaft 80. The free end 31 of the second supporting part 30 can be bent relative to the first supporting part 20 by means of the first bending part 32. The second damping rotating shaft 80 is characterized in that the user must take the second supporting part 30 as an arm of force to apply a moment greater than a second critical moment to the second damping rotating shaft 80 to overcome a resistance of the second damping rotating shaft 80 and make it rotate. The second supporting part 30 takes the second damping rotating shaft 80 as the fulcrum, and the first supporting part 20 and the second supporting part 30 can be bent relative to each other by the first damping rotating shaft 40, so that the first supporting part 20 and the second supporting part 30 form a third included angle β (as shown in FIG. 16). In addition, the user are enabled to freely adjust the third included angle β between the first supporting part 20 and the second supporting part 30 without any limitation.

The contents of this embodiment that are the same as other embodiments mentioned above or that can be understood by referring to other embodiments mentioned above will not be further described herein.

Referring to FIG. 17 to FIG. 18, in this embodiment, the upright stand for the mobile device further includes a bonding part 90 connecting the first supporting part 20 with the second supporting part 30, and the bonding part 90 and the coupling part 10 are directly or indirectly fixed to each other in a permanent way. The bonding part 90 can be turned over relative to the first supporting part 20 and the second supporting part 30 by means of the second bending part 33. The first damping rotating shaft 40 is arranged at the second bending part 33.

The bonding part 90 can be turned over relative to the first supporting part 20 and the second supporting part 30 by the first damping rotating shaft 40. The second bending part 33 further comprises a plurality of bending parts 3 arranged along the coaxial direction of the first damping rotating shaft 40, the bending parts 3 may be arranged on one side or both sides of the first damping rotating shaft 40, and the bonding part 90 can also be turned over relative to the first supporting part 20 and the second supporting part 30 by means of the plurality of bending parts 3. The user can freely adjust the viewing angle of the first mobile device through the bonding part 90 without any limitation, and the first damping rotating shaft 40 will not rotate at all angles, which enables the user to bend the coupling part 10 at all angles, thereby increasing the variability of the viewing angle of the first mobile device.

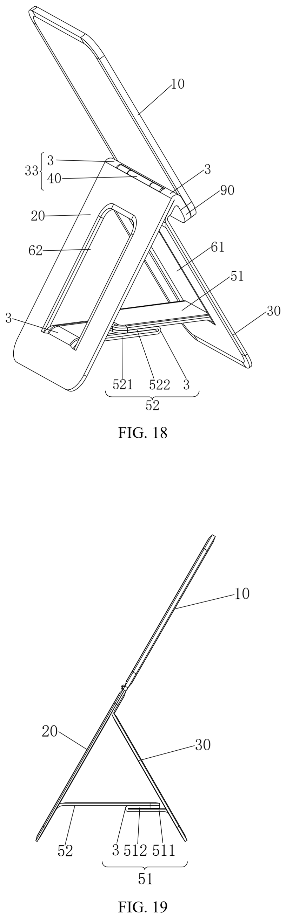

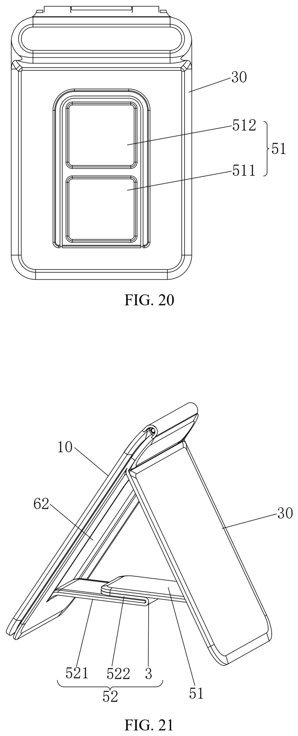

Referring to FIG. 19 to FIG. 20, in this embodiment, the first sub-connecting part 51 further includes a bending part 3, by which the first sub-connecting part 51 can be bent relative to the second sub-connecting part 52. In a supporting state, for example as shown in FIG. 20, the first sub-connecting part 51 is in a folded state. In this embodiment, the first sub-connecting part 51 further comprises a plurality of bending parts 3, a head 511 of the first sub-connecting part and a tail 512 of the first sub-connecting part; wherein one end of the head 511 of the first sub-connecting part is connected with the second supporting part 30 through a bending part 3, and the head 511 of the first sub-connecting part can be bent relative to the second supporting part 30 through the bending part 3. The other end of the head 511 of the first sub-connecting part is connected with one end of the tail 512 of the first sub-connecting part through a bending part 3, and the head 511 of the first sub-connecting part can be folded relative to the tail 512 of the first sub-connecting part through the bending part 3. The other end of the tail 522 of the first sub-connecting part is connected with the second sub-connecting part 52.

The contents of this embodiment that are the same as other embodiments mentioned above or that can be understood by referring to other embodiments mentioned above will not be further described herein.

Referring to FIG. 21, in this embodiment, both the first accommodating cavity and the second accommodating cavity 62 are accommodating grooves, and the first sub-connecting part 51 is correspondingly accommodated in the first accommodating cavity, while the second sub-connecting part 52 is correspondingly accommodated in the second accommodating cavity 62, which provides better protection. Moreover, the outer surfaces of the first supporting part 20 and the second supporting part 30 of the upright stand for the mobile device are both flat surfaces, which make the upright stand more beautiful as a whole.

The contents of this embodiment that are the same as other embodiments mentioned above or that can be understood by referring to other embodiments mentioned above will not be further described herein.

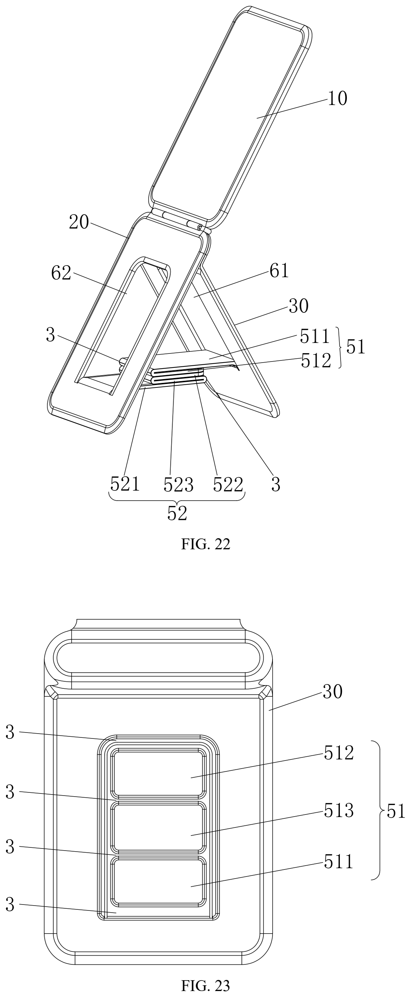

Referring to FIG. 22, in this embodiment, the first sub-connecting part 51 further comprises at least one bending part 3, by which the first sub-connecting part 51 can be bent relative to the second sub-connecting part 52. Specifically, the first sub-connecting part 51 further comprises a plurality of bending parts 3, a head 511 of the first sub-connecting part and a tail 512 of the first sub-connecting part; wherein one end of the head 511 of the first sub-connecting part is connected with the second supporting part 30 through a bending part 3, and the head 511 of the first sub-connecting part can be bent relative to the second supporting part 30 through the bending part 3. The other end of the head 511 of the first sub-connecting part is connected with one end of the tail 512 of the first sub-connecting part through a bending part 3, and the head 511 of the first sub-connecting part can be folded relative to the tail 512 of the first sub-connecting part through the bending part 3. The other end of the tail 522 of the first sub-connecting part is connected with the second sub-connecting part 52.

The second sub-connecting part 52 further comprises at least one bending part 3, by which the second sub-connecting part 52 can be bent relative to the first sub-connecting part 51. Specifically, the second sub-connecting part 52 further comprises a plurality of bending parts 3, a head 521 of the second sub-connecting part, a middle part 523 of the second sub-connecting part and a tail 522 of the second sub-connecting part. One end of the head 521 of the second sub-connecting part is connected with the first supporting part 20 through a bending part 3, and the head 521 of the second sub-connecting part can be bent relative to the first supporting part 20 by the bending part 3. The other end of the head 521 of the second sub-connecting part is connected with one end of the middle part 523 of the second sub-connecting part through a bending part 3, and the head 521 of the second sub-connecting part can be folded relative to the middle part 523 of the second sub-connecting part by the bending part 3. The other end of the middle part 523 of the second sub-connecting part is connected with one end of the tail 522 of the second sub-connecting part through a bending part 3, and the middle part 523 of the second sub-connecting part can be folded relative to the tail 522 of the second sub-connecting part through the bending part 3. The other end of the tail 522 of the second sub-connecting part can be connected with the other end of the tail 522 of the first sub-connecting part through a bending part 3, and the tail 522 of the second sub-connecting part can be folded relative to the tail 522 of the first sub-connecting part through the bending part 3.

As shown in FIG. 22, in a supporting state, the first sub-connecting part 51 is in a folded state and the second sub-connecting part 52 is in a folded state.

The contents of this embodiment that are the same as other embodiments mentioned above or that can be understood by referring to other embodiments mentioned above will not be further described herein.

Referring to FIG. 23, in this embodiment, the first sub-connecting part 51 further includes at least one bending part 3, by which the first sub-connecting part 51 can be bent relative to the second sub-connecting part 52. Specifically, the first sub-connecting part 51 further comprises a plurality of bending parts 3, a head 511 of the first sub-connecting part, a middle part 513 of the first sub-connecting part and a tail 512 of the first sub-connecting part. One end of the head 511 of the first sub-connecting part is connected with the second supporting part 30 through a bending part 3, and the head 511 of the first sub-connecting part can be bent relative to the second supporting part 30 through the bending part 3. The other end of the head 511 of the first sub-connecting part is connected with one end of the middle part 513 of the first sub-connecting part through a bending part 3, and the head 511 of the first sub-connecting part can be folded relative to the middle part 513 of the first sub-connecting part by the bending part 3. The other end of the middle part 513 of the first sub-connecting part is connected with one end of the tail 512 of the first sub-connecting part through a bending part 3, and the middle part 513 of the first sub-connecting part can be folded relative to the tail 512 of the first sub-connecting part by the bending part 3. The other end of the tail 512 of the first sub-connecting part may be connected with the second sub-connecting part 52 through a bending part 3, and the tail 512 of the first sub-connecting part can be folded relative to the second sub-connecting part 52 by the bending part 3.

The contents of this embodiment that are the same as other embodiments mentioned above or that can be understood by referring to other embodiments mentioned above will not be further described herein.

Referring to FIG. 22 and FIG. 23, it can be seen that in the embodiment shown in FIG. 22, the first sub-connecting part 51 may be folded once while the second connecting part 52 may be folded twice. In the embodiment shown in FIG. 23, the first sub-connecting part 51 may be folded twice, and the second connecting part 52 may also be folded twice. In some embodiments, both the first sub-connecting part 51 and the second sub-connecting part 52 can be folded for many times, instead of being limited to two times.

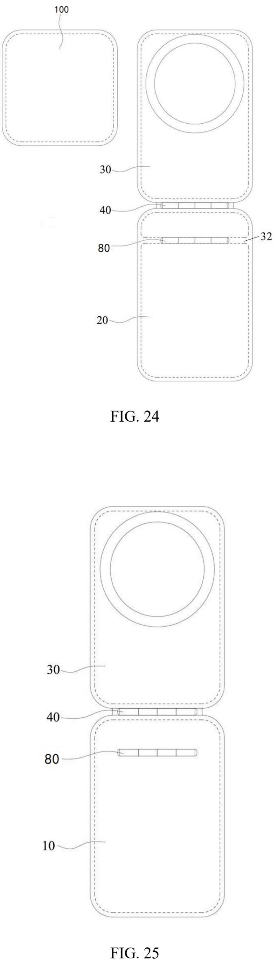

Referring to FIG. 24 to FIG. 29, in some embodiments, the upright stand for the mobile device comprises two damping rotating shafts, which greatly improves the customization and freedom of the supporting angle. The upright stand for the mobile device mainly comprises a first supporting part 10, a second supporting part 20, and a coupling part 30. The coupling part 30 may be directly or indirectly fixed to the first mobile device in a non-permanent way. One end of the second supporting part 20 is fixed with one end of the first supporting part 10, the other end of the second supporting part 20 opposite to the end fixed with the first supporting part 10 is a free end, and the second supporting part 20 is provided with a first bending part 32, by which the free end of the second supporting part 20 can be bent relative to the first supporting part 10. One end of the first supporting part 10 and the second supporting part 20 is connected with one end of the coupling part 30 through the first damping rotating shaft 40, and the coupling part 30 can be turned over relative to the first supporting part 10 and the second supporting part 20 through the first damping rotating shaft 40. The second supporting part 20 further comprises a second damping rotating shaft 80 which is arranged at the first bending part 32, and the second supporting part 20 can be turned over relative to the first supporting part 10 through the second damping rotating shaft 80.

As mentioned earlier, the upright stand for the mobile device of this embodiment has the first damping rotating shaft 40 and the second damping rotating shaft 80. The user needs to apply a moment greater than the first critical moment to the first damping rotating shaft 40 to overcome the resistance of the first damping rotating shaft 40 and make it rotate, the first supporting part 10 and the coupling part 30 take the first damping rotating shaft 40 as the fulcrum, the first supporting part 10 and the coupling part are turned over relative to each other through the first damping rotating shaft 40, and the first supporting part 10 and the coupling part 30 form the first included angle θ. Similarly, the user needs to apply a moment greater than the second critical moment to the second damping rotating shaft 80 to overcome the resistance of the second damping rotating shaft 80 to make it rotate, the second supporting part 20 takes the second damping rotating shaft 80 as the fulcrum to be turned over relative to the first supporting part 10. After being turned over, the first supporting part 10 and the second supporting part 20 form the third included angle β. Through the first damping rotating shaft 40 and the second damping rotating shaft 80, the user can adjust the first included angle θ and the third included angle β at will to generate different supporting angles. The upright stand for the mobile device in this embodiment mainly has three use states. The respective usage states will be described below with reference to the drawings.

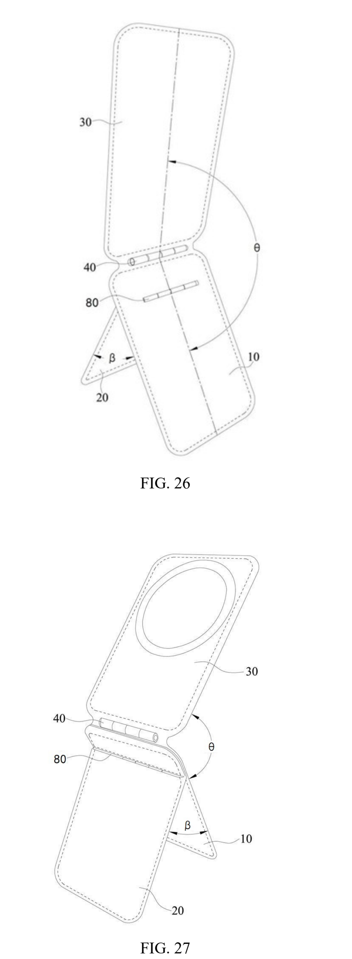

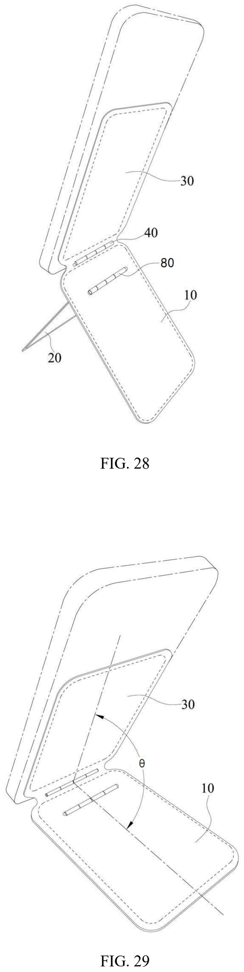

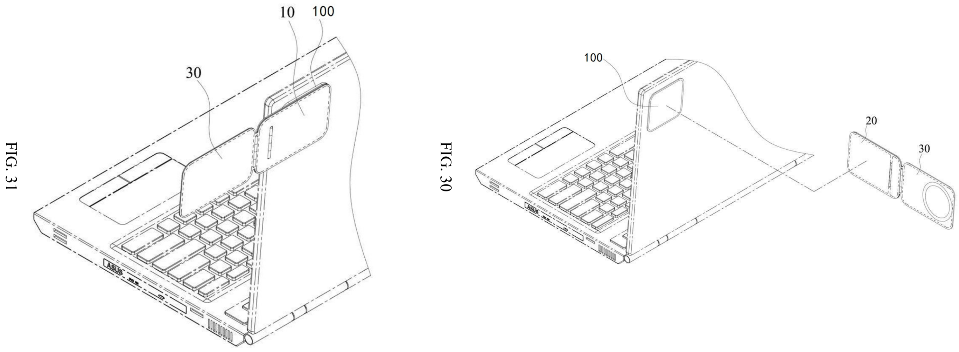

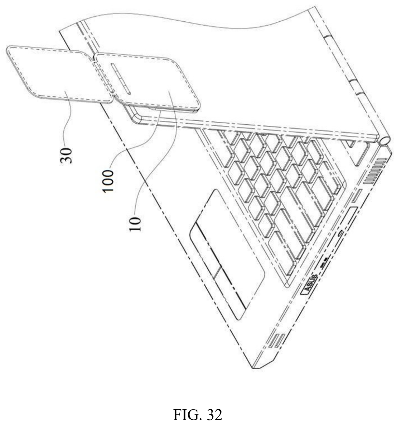

In the storage state, the coupling part 30 and the first supporting part 10 are attached to each other, and the second supporting part 20 and the first supporting part 10 are attached to each other. As shown in FIG. 26 to FIG. 28, in the first supporting state, the first supporting part 10 and the second supporting part 20 form the third included angle β, one side of the first supporting part 10 and the second supporting part 20 abuts against a plane (e.g., the desktop), and the first mobile device is fixed to the coupling part 30 in a non-permanent way. As shown in FIG. 29, in the second supporting state, the first supporting part 10 and the second supporting part 20 are attached to each other, one surface of the first supporting part 10 and the second supporting part 20 is placed on a plane, and the first supporting part 10 and the coupling part 30 form a first included angle θ. Further referring to FIG. 30 to FIG. 32, in the third supporting state, the user can connect two mobile devices through the upright stand for the mobile devices. In order to allow users to watch the screens of two different mobile devices side by side at the same time, the present application may further comprise a connector 100, which may be fixed to one surface of the second mobile device in a non-permanent or permanent way. The first supporting part 10 and the second supporting part 20 are attached to each other, one surface of the first supporting part 10 or the second supporting part 20 is fixed with the connector 100 fixed to the second mobile device in a non-permanent way, and the first mobile device is fixed to the coupling part 30 in a non-permanent way.

However, what described above are only preferred embodiments of this model, and they are not intended to limit the scope of implementation of this model. Therefore, equivalent changes and modifications made without departing from the spirit and scope of this model shall all be covered in the patent scope of this model.

## Claims

1. An upright stand for a mobile device, being **characterized in that**, comprising: a coupling part, which can be directly or indirectly fixed with a first mobile device mutually in a non-permanent way; and a first supporting part and a second supporting part, wherein one end of the second supporting part is mutually fixed with one end of the first supporting part, the other end of the second supporting part opposite to the end mutually fixed with the first supporting part is a free end, and the second supporting part is provided with a first bending part, by which the free end of the second supporting part can be bent relative to the first supporting part;
wherein, one end of the first supporting part and the second supporting part is connected with one end of the coupling part by means of a first damping rotating shaft, and the coupling part can be turned over relative to the first supporting part and the second supporting part by means of the first damping rotating shaft.

2. The upright stand for the mobile device according to Claim 1, being **characterized in that**, further comprising a connecting part, wherein the connecting part connects the free end of the second supporting part with the first supporting part by a plurality of bending parts.

3. The upright stand for the mobile device according to Claim 2, being **characterized in that**, the connecting part comprises a first sub-connecting part and a second sub-connecting part, one end of the first sub-connecting part is connected with the free end of the second supporting part, and the other end of the first sub-connecting part is connected with the second sub-connecting part.

4. The upright stand for the mobile device according to Claim 3, being **characterized in that**, the second sub-connecting part further comprises a bending part, by which the second sub-connecting part can be bent relative to the first sub-connecting part.

5. The upright stand for the mobile device according to Claim 4, being **characterized in that**, in a supporting state, the second sub-connecting part is in a folded state.

6. The upright stand for the mobile device according to Claim 4, being **characterized in that**, in a storage state, one end of the first sub-connecting part is attached to the second supporting part, and the first supporting part and the second supporting part are attached to each other.

7. The upright stand for the mobile device according to Claim 1, being **characterized in that**, a moment greater than a first critical moment needs to be applied to the first damping rotating shaft to overcome a resistance of the first damping rotating shaft to make it rotate, the first supporting part and the coupling part take the first damping rotating shaft as a fulcrum, the first supporting part and the coupling part are turned over relative to each other by means of the first damping rotating shaft, and the first supporting part and the coupling part form a first included angle.

8. The upright stand for the mobile device according to Claim 1, being **characterized in that**, the coupling part is fixed mutually with a protective structure joining the first mobile device in a non-permanent way.

9. The upright stand for the mobile device according to Claim 1, being **characterized in that**, the coupling part is directly fixed with the first mobile device mutually in a non-permanent way.

10. The upright stand for the mobile device according to Claim 5, being **characterized in that**, in the supporting state, the second sub-connecting part can be maintained in the folded state by magnetism.

11. The upright stand for the mobile device according to Claim 6, being **characterized in that**, in the storage state, one end of the first sub-connecting part is attached to the second supporting part by magnetism, and the first supporting part and the second supporting part are attached to each other by magnetism.

12. The upright stand for the mobile device according to Claim 7, being **characterized in that**, the first critical moment is greater than a moment applied to the first damping rotating shaft when the first mobile device and the coupling part are directly or indirectly fixed to each other.

13. The upright stand for the mobile device according to Claim 1, being **characterized in that**, in another supporting state, the first supporting part and the coupling part form a second included angle, and the first supporting part and the second supporting part are attached to each other by magnetism.

14. The upright stand for the mobile device according to Claim 13, being **characterized in that**, in the other supporting state, the first supporting part and the second supporting part are placed on a plane.

15. The upright stand for the mobile device according to Claim 3, being **characterized in that**, the first sub-connecting part further comprises a bending part, by which the first sub-connecting part can be bent relative to the second sub-connecting part.

16. The upright stand for the mobile device according to Claim 15, being **characterized in that**, in a supporting state, the first sub-connecting part is in a folded state.

17. The upright stand for the mobile device according to Claim 1, being **characterized in that**, the second supporting part further comprises a second damping rotating shaft which is arranged at the first bending part, and the second supporting part can be turned over relative to the first supporting part via the second damping rotating shaft.

18. The upright stand for the mobile device according to Claim 1, being **characterized in that**, further comprising a bonding part connecting the first supporting part with the second supporting part, wherein the bonding part and the coupling part are directly or indirectly fixed to each other in a permanent way; the bonding part can be turned over relative to the first supporting part and the second supporting part by means of the second bending part; and the first damping rotating shaft is arranged at the second bending part.

19. The upright stand for the mobile device according to Claim 18, being **characterized in that**, the second bending part further comprises a plurality of bending parts arranged along the coaxial direction of the first damping rotating shaft, and the bonding part can also be turned over relative to the first supporting part and the second supporting part by means of the plurality of bending parts.

20. The upright stand for the mobile device according to Claim 3, being **characterized in that**, the first sub-connecting part further comprises at least one bending part, by which the first sub-connecting part can be bent relative to the second sub-connecting part; and the second sub-connecting part further comprises at least one bending part, by which the second sub-connecting part can be bent relative to the first sub-connecting part.

21. The upright stand for the mobile device according to Claim 20, being **characterized in that**, in a supporting state, the first sub-connecting part is in a folded state and the second sub-connecting part is in a folded state.

22. The upright stand for the mobile device according to any of Claims 3 to 6, 10, 11, 15, 16, 20 and 21, being **characterized in that**, the side wall of the second supporting part is provided with a first accommodating cavity for accommodating the first sub-connecting part, and the side wall of the first supporting part is provided with a second accommodating cavity for accommodating the second sub-connecting part.

23. The upright stand for the mobile device according to Claim 22, being **characterized in that**, the first accommodating cavity is an accommodating hole or an accommodating groove, and the second accommodating cavity is an accommodating hole or an accommodating groove.

24. The upright stand for the mobile device according to Claim 17, being **characterized in that**, further comprising a connector, and the connector can be fixed to one surface of a second mobile device in a non-permanent or permanent way.

25. The upright stand for the mobile device according to Claim 24, being **characterized in that**, a moment greater than the first critical moment needs to be applied to the first damping rotating shaft to overcome the resistance of the first damping rotating shaft to make it rotate, the first supporting part and the coupling part take the first damping rotating shaft as a fulcrum, the first supporting part and the coupling part are turned over relative to each other by the first damping rotating shaft, and the first supporting part and the coupling part form a first included angle.

26. The upright stand for the mobile device according to Claim 17, being **characterized in that**, a moment greater than a second critical moment needs to be applied to the second damping rotating shaft to overcome the resistance of the second damping rotating shaft to make it rotate, the second supporting part takes the second damping rotating shaft as a fulcrum to be turned over, and the first supporting part and the second supporting part form a third included angle.

27. The upright stand for the mobile device according to Claim 17, being **characterized in that**, in the storage state, the coupling part and the first supporting part are attached to each other, and the second supporting part and the first supporting part are attached to each other.

28. The upright stand for the mobile device according to Claim 26, being **characterized in that**, in the first supporting state, the first supporting part and the second supporting part form a third included angle, and one side of the first supporting part and the second supporting part abuts against a plane.

29. The upright stand for the mobile device according to Claim 25, being **characterized in that**, in the second supporting state, the first supporting part and the second supporting part are attached to each other, one surface of the first supporting part and the second supporting part is placed on a plane, and the first supporting part and the coupling part form a first included angle.

30. The upright stand for the mobile device according to Claim 25, being **characterized in that**, in the third supporting state, the first supporting part and the second supporting part are attached to each other, one surface of the first supporting part or the second supporting part is fixed mutually with the connector in a non-permanent way, and the first mobile device and the second mobile device are connected through the upright stand for the mobile device.
